# EUROPÄISCHE PATENTSCHRIFT

(11) **EP 1 514 370 B1**
(45) Veröffentlichungstag und Bekanntmachung des Hinweises auf die Patenterteilung: **07.12.2005**
(21) Anmeldenummer: 03759887.7
(22) Anmeldetag: 29.04.2003
(51) Int. Cl.: H04B 17/00, H04L 1/24

(54) **SIGNALANALYSATOR UND VERFAHREN ZUM ANZEIGEN VON LEISTUNGEN VON CODEKANÄLEN**
SIGNAL ANALYZER AND METHOD FOR DISPLAYING CAPACITIES OF CODE CHANNELS
ANALYSEUR DE SIGNAL ET PROCEDE D'AFFICHAGE DE PUISSANCES DE CANAUX DE CODE

(30) Priorität: 14.06.2002 DE 10226640
(43) Veröffentlichungstag der Anmeldung: 16.03.2005
(73) Patentinhaber: Rohde & Schwarz GmbH & Co. KG, 81671 München (DE)
(72) Erfinder: FRANKE, Jens, 82110 Germering (DE); NITSCH, Bernhard, 80687 München (DE); HELLER, Klaus, 82131 Gauting (DE)
(74) Vertreter: Körfer, Thomas
(86) Internationale Anmeldenummer: PCT/EP2003/004465
(87) Internationale Veröffentlichungsnummer: WO 2003/107566

(56) Entgegenhaltungen:
- EP-A- 1 259 013
- EP-A- 1 304 822
- DE-A- 19 955 564
- US-B1- 6 219 340

## Beschreibung

Die Erfindung betrifft einen Signalanalysator sowie ein Verfahren zum Anzeigen von Leistungen von Codekanälen eines CDMA(Code Division Multiple Access)-Signals.

Zur Überprüfung von Komponenten für Mobilfunksysteme der dritten Generation ist es erforderlich, die Leistung für einzelne Codekanäle, aus denen sich das Gesamtsignal zusammensetzt, zu ermitteln. Um eine Auswertung der gemessenen Leistungen der einzelnen Codekanäle vornehmen zu können, werden die jeweiligen Leistungen der Codekanäle grafisch dargestellt. Eine solche grafische Darstellung der Leistung von einzelnen Codekanälen ist zum Beispiel in der US 6,219,340 B1 offenbart.

In der US 6,219,340 B1 ist gezeigt, daß die einzelnen Leistungen der jeweils aktiven Codekanäle in Form eines Balkens dargestellt werden. Die einzelnen Kanäle werden dabei in Richtung der X-Achse so aufgetragen, daß die jeweils zu einer Codeklasse gehörenden Codekanäle nebeneinander liegend angeordnet sind. Mittels der Balkenhöhe wird die für den jeweiligen Codekanal ermittelte Leistung angezeigt. Die Zugehörigkeit der einzelnen Codekanäle zu einer jeweiligen Codeklasse, also zu einem bestimmten Spreizfaktor (Spreadingfactor, SF), wird in der vorgeschlagenen Darstellung dadurch erreicht, daß entsprechend dem niedrigeren Spreizfaktor in der niedrigeren Codeklasse die Darstellung der zugeordneten Balken für den jeweils entsprechenden Codekanal der niedrigeren Codeklasse breiter ist. Weiterhin ist in der US 6,219,340 B1 vorgeschlagen, daß inaktive Codekanäle durch einen Strich in der Darstellung angedeutet werden. Als inaktive Kanäle sind dabei alle Codekanäle zu verstehen, die nicht zur Datenübertragung beitragen.

Die in der US 6,219,340 B1 vorgeschlagene Darstellung eines vermessenen CDMA-Signals hat den Nachteil, daß keine Unterscheidung möglich ist, ob ein Codekanal in einer Codeklasse tatsächlich aktiv ist, oder der Codekanal inaktiv ist, dort jedoch Leistung eines entsprechenden Codekanals eines höheren Spreizfaktors meßbar ist. Eine solche fehlende Unterscheidbarkeit zwischen einer tatsächlichen Leistung eines aktiven Codekanals und einer sogenannten Alias-Leistung eines inaktiven Codekanals einer gegenüber der tatsächlichen Codeklasse des aktiven Codekanals niedrigeren Codeklasse erschwert die Auswertung des gesamten CDMA-Signals erheblich.

Es ist die Aufgabe der Erfindung, einen Signalanalysator sowie ein Verfahren zum Anzeigen der Codekanal-Leistungen eines CDMA-Signals zu schaffen, bei dem eine Unterscheidung zwischen einer tatsächlich von einem aktiven Codekanal stammende Leistung von einer Alias-Leistung möglich ist. Die Aufgabe wird durch das erfindungsgemäße Verfahren nach Patentanspruch 1 sowie den Signalanalysator nach Patentanspruch 7 gelöst.

Nach dem erfindungsgemäßen Verfahren werden diejenigen Codekanäle, welche hinsichtlich eines bestimmten Basisspreizfaktors inaktiv sind, für die jedoch eine sogenannte Alias-Leistung auftritt, in einem Diagramm, welches die in den einzelnen Codekanälen auftretende Leistungen darstellt, besonders gekennzeichnet. Bei der Auswertung der einzelnen Leistungen der Codekanäle ist es daher einfach möglich, zwischen tatsächlich aktiven Codekanälen und Codekanälen, die in dem bestimmten Basisspreizfaktor inaktiv sind, zu unterscheiden. Diese Unterscheidung ist auch dann möglich, wenn die eigentlich inaktiven Kanäle eine meßbare Leistung in Form einer Alias-Leistung aufweisen.

Gemäß den in den Unteransprüchen aufgeführten Maßnahmen sind vorteilhafte Weiterbildungen des erfindungsgemäßen Verfahrens sowie des erfindungsgemäßen Signalanalysators möglich.

Insbesondere ist es vorteilhaft, für die Darstellung der Leistung der einzelnen Codekanäle eine Balkendiagrammdarstellung zu wählen, sowie diejenigen Balken der Codekanäle, in denen eine Alias-Leistung meßbar ist, in einer anderen Farbe darzustellen. Durch diese farbige Kennzeichnung ist es einfach möglich, dem Diagramm zu entnehmen, welche Codekanäle eine Alias-Leistung aufweisen, die tatsächlich von Codekanälen einer höheren Codeklasse stammen. Die Information über die Höhe der tatsächlich gemessenen Leistung bleibt dabei erhalten.

Besonders vorteilhaft ist es weiterhin, beim Auftreten einer solchen Alias-Leistung auf eine Eingabe eines Bedieners hin automatisch in die Darstellung derjenigen Codeklasse zu wechseln, die die Codekanäle enthält, die die Alias-Leistung verursachen. Ausgehend von einer Darstellung der Codeklasse mit dem Basisspreizfaktor ist es dem Bediener damit möglich, sofort zu erkennen, aus welcher Codeklasse die in einer niedrigeren Codeklasse auftretende Alias-Leistung tatsächlich stammt. Eine weitere Vereinfachung ist dadurch möglich, daß derjenige Codekanal, welcher eine Alias-Leistung aufweist, mit einer Markierungseinrichtung markiert wird, welche beim Wechsel in die Darstellung mit dem höheren Spreizfaktor dem entsprechenden, die Alias-Leistung verursachenden Codekanal zugeordnet wird.

Durch eine weitere, z.B. andersfarbige Kennzeichnung ist es zudem möglich, daß bei Verwendung von mehreren Antennen der gleichen Sendeanlage, welchen zueinander orthogonale Codes zugeordnet sind, zu unterscheiden, ob die Alias-Leistung von einem Signal derselben Antenne oder von einem Codekanal der anderen Antenne stammt. Die Verwendung verschiedener Kennzeichnungen für Codekanäle, welche eine Alias-Leistungen mit verschiedenen Ursachen aufweisen, ermöglicht eine einfache Unterscheidung der entsprechenden Ursachen der Alias-Leistung.

Ein bevorzugtes Ausführungsbeispiel der Erfindung ist in den Zeichnungen dargestellt und in der nachfolgenden Beschreibung näher erläutert. Es zeigen:
- Fig. 1: eine schematische Darstellung für das Entstehen einer Alias-Leistung;
- Fig. 2: eine Darstellung gemessener Leistungen von Codekanälen mit einer Alias-Leistung für einen Basisspreizfaktor;
- Fig. 3: eine Darstellung der Leistungen der Codekanäle aus Fig. 2 für einen höheren Spreizfaktor;
- Fig. 4: eine schematische Darstellung für das Entstehen einer Alias-Leistung durch Verwendung zweier Antennen;
- Fig. 5: die Darstellung der Leistungen der Codekanäle für einen Basisspreizfaktor in einem Balkendiagramm;
- Fig. 6: die Darstellung der Leistung der Codekanäle aus Fig. 5 für einen höheren Spreizfaktor;
- Fig. 7: eine weitere schematische Darstellung für das Entstehen einer Alias-Leistung und
- Fig. 8: ein Blockschaltbild eines erfindungsgemäßen Signalanalysators.

Bei einem Mobilfunksystem der dritten Generation kommuniziert eine Basisstation mit mehreren Mobilgeräten, wobei die verschiedenen Mobilstationen gleichzeitig Informationen zu der Basisstation übertragen und umgekehrt. Die Unterscheidung der einzelnen von oder zu den Mobilstationen gesendeten Signale erfolgt durch Zuweisung entsprechender Codes an die Teilnehmer, wobei die entsprechenden Codes zueinander orthogonal sind. In Abhängigkeit von dem dem jeweiligen Code zugrunde liegenden Spreizfaktor SF läßt sich die Anzahl der pro Zeiteinheit zu übertragenen Informationen variieren. Um damit die Übertragungskapazität möglichst auszuschöpfen, besteht das tatsächlich von der Basisstation empfangene bzw. gesendete Signal aus Codekanälen, die unterschiedliche Spreizfaktoren aufweisen.

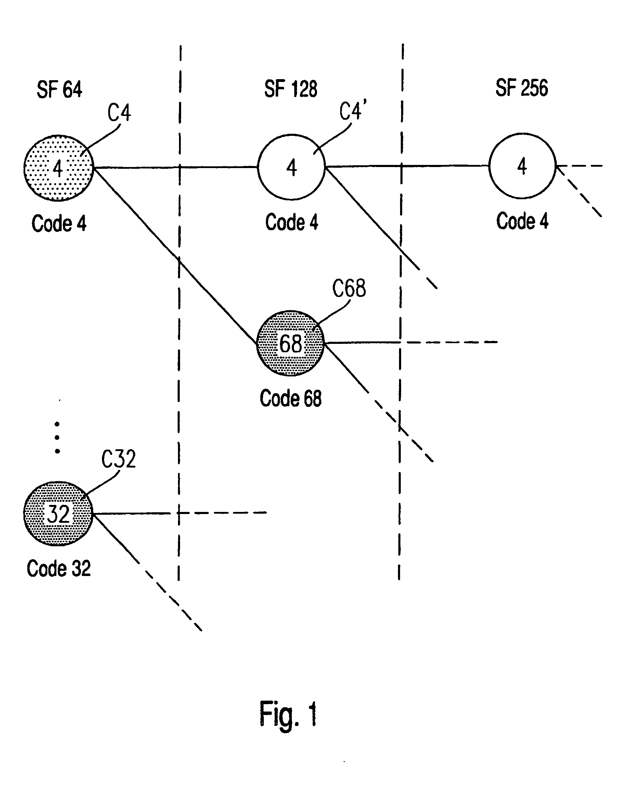

Jeder Code eines bestimmten Spreizfaktors verzweigt sich in der Ebene des nächsthöheren Spreizfaktors in wiederum zwei orthogonale Codes. In der Fig. 1 ist dies beispielhaft für den Code 4 bei einem Spreizfaktor 64 (Bezugszeichen C4) dargestellt. In der nächsthöheren Codeklasse, also mit Spreizfaktor 128, ist der Code 4 in einen Code 4 zu Spreizfaktor 128 (Bezugszeichen C4') sowie einen Code 68 zum Spreizfaktor 128 (Bezugszeichen C68) aufgeteilt. Die Fig. 1 zeigt einen Code-Baum ausschnittsweise mit drei Codeklassen mit den Spreizfaktoren 64, 128 und 256.

Die in der schematischen Darstellung der Fig. 1 dunkel dargestellten Codes 32 bezüglich Spreizfaktor 64 (C32) bzw. Code 68 bezüglich Spreizfaktor 128 (C68) sind aktiv. Beim Vermessen des Signals mit Hilfe eines Signalanalysators, der die jeweils gemessenen Leistung der Codekanäle bezüglich dem Spreizfaktor 64 dargestellt, wird die Leistung des aktiven Codekanals 32 dargestellt und zusätzlich eine Leistung für den Codekanal 4. Dabei handelt es sich bei der Leistung des Codekanals 4 um eine sogenannte Alias-Leistung, welche auch bei einem inaktiven Codekanal 4 auftritt und von einem tatsächlich aktiven Codekanal 68 des Spreizfaktors 128 stammt. Der Codekanal 4 des Spreizfaktors 128 ist dagegen tatsächlich inaktiv. In den Figuren sind inaktive Codekanäle durch nicht ausgefüllte Kreise dargestellt.

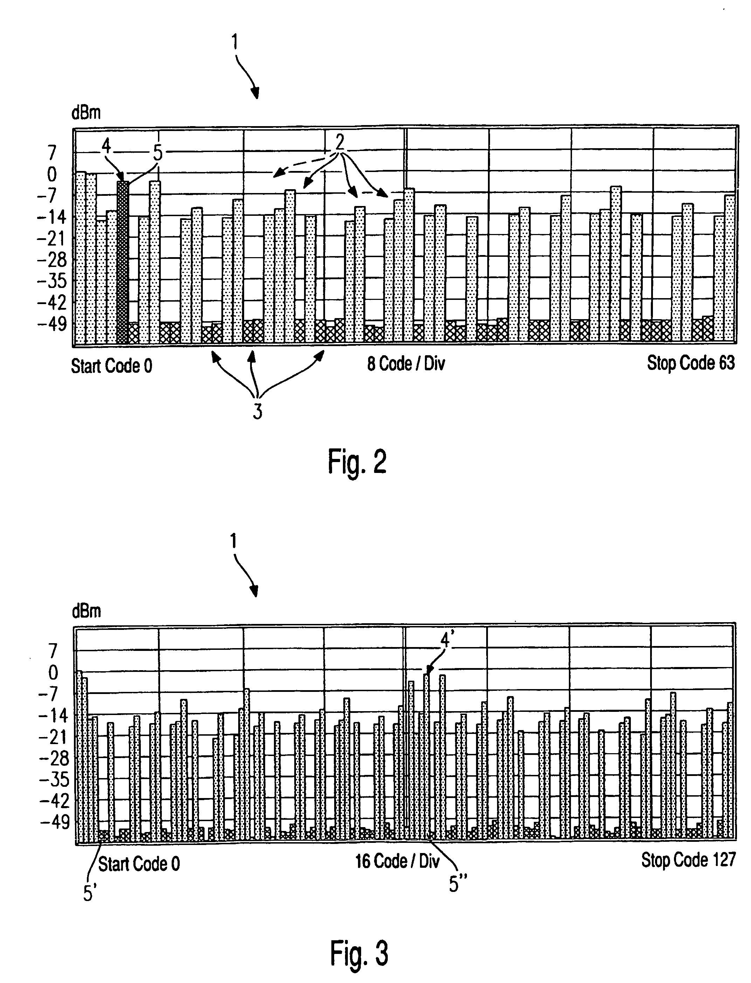

In Fig. 2 ist die Darstellung der Leistungen der einzelnen Codekanäle für den Basisspreizfaktor 64 dargestellt. In der Darstellung als Balkendiagramm werden horizontal die einzelnen Codekanäle aufgetragen, so daß die Höhe der den einzelnen Codekanälen zugeordneten Balken die jeweils für den Codekanal gemessene Leistung angibt. Tatsächlich in der dargestellten Codeklasse aktive Codekanäle sind in der Fig. 2 mit dem Bezugszeichen 2 bezeichnet und werden z.B. in einer bestimmten Farbe dargestellt. Die bei einem Basisspreizfaktor von 64 inaktiven Codekanäle werden vorzugsweise mit einer anderen Farbe dargestellt und sind beispielhaft in der Fig. 2 mit dem Bezugszeichen 3 gezeigt.

Der Codekanal C4, der wie zu Fig. 1 bereits erläutert wurde, eine Alias-Leistung aufweist, ist in der Fig. 2 mit dem Bezugszeichen 5 bezeichnet und wird von der Anzeigevorrichtung 1 in besonderer Weise gekennzeichnet. Bei der in der Fig. 2 gewählten Balkendarstellung kann hierfür zum Beispiel ein andersfarbiger Balken verwendet werden. In der Fig. 2 ist weiterhin eine Markierung 4 zu erkennen, welche von dem Bediener des Meßgeräts einem beliebigen Codekanal zugeordnet werden kann. Im dargestellten Beispiel ist die Markierung 4 dem farbig gekennzeichneten Codekanal C4 (Bezugszeichen 5) zugeordnet.

In Fig. 3 ist die Darstellung des Meßergebnisses, welches bereits in der Fig. 2 dargestellt wurde, für einen Spreizfaktor 128, also die nächsthöhere Codeklasse dargestellt. Wie bereits zu Fig. 1 erläutert wurde, ist in der Darstellung bezüglich des Spreizfaktors 128 eine eindeutige Unterscheidung zwischen einem Codekanal C68 und dem Codekanal C4' zu treffen. Dementsprechend zeigt die Anzeigevorrichtung 1 für den mit dem Bezugszeichen 5' bezeichneten Codekanal C4' eine nur geringe Rausch-Leistung an, was gleichbedeutend damit ist, daß der Code C4' tatsächlich inaktiv ist. Dagegen wird für den mit dem Bezugszeichen 5" bezeichneten Codekanal C68 eine relativ hohe Leistung angezeigt, was bedeutet, daß der Codekanal C68 tatsächlich aktiv ist und so die Alias-Leistung des Codekanals C4 bei Spreizfaktor 64 verursacht hat. Da der Codekanal C68 keine Alias-Leistung sondern eine tatsächliche Leistung aufweist, wird der zu dem Codekanal C68 gehörende Balken nun nicht mehr durch eine besondere Farbgebung gekennzeichnet. Er erhält vielmehr die gleiche Farbe wie sämtliche anderen aktiven Code-Kanäle bezüglich des Spreizfaktors 128. Um das Auffinden des entsprechenden Codekanals zu erleichtern, wird die Markierung 4 aus der Fig. 2 als Markierung 4' auf den Codekanal C68 in der Fig. 3 gesetzt. Dieses Versetzen der Markierung 4, 4' entspricht dem Entstehen der Alias-Leistung aufgrund der Codegenerierung nach der Hadamard-Matrix.

Anstelle der bevorzugten Darstellung in einem Balkendiagramm mit besonderer Farbgebung der entsprechenden Codekanäle sind auch andere Darstellungen möglich, wie beispielsweise Pfeildarstellungen oder Liniendiagramme usw. Das Kennzeichnen eines Codekanals, der eine Alias-Leistung aufweist, ist ebenfalls mit anderen Maßnahmen als einer Farbgebung möglich. Denkbar sind beispielsweise eine Schraffur oder ein Rahmen, der um den Balken angeordnet ist, oder ein blinkender Balken oder Pfeil.

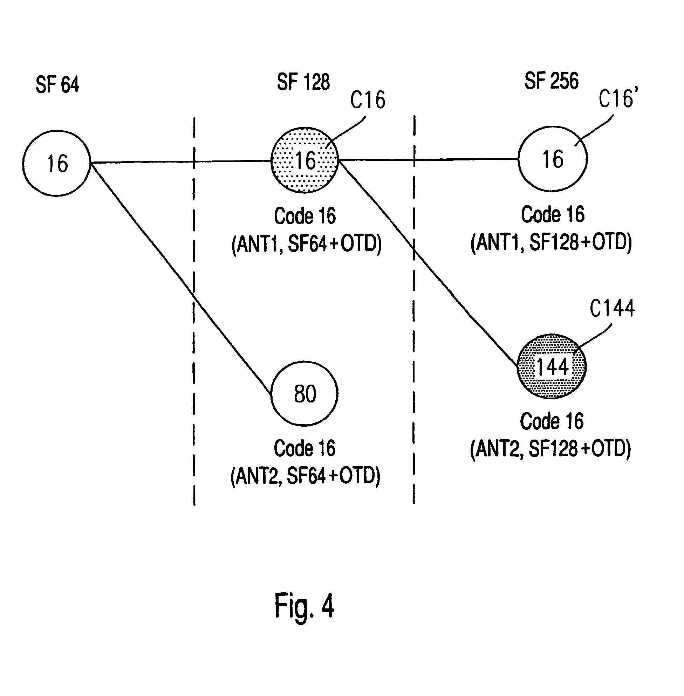

In Fig. 4 ist eine weitere Möglichkeit zur Entstehung der Alias-Leistung dargestellt, wie sie bei Sendeanlagen mit zwei Antennen auftritt, wobei die Antennen jeweils Codes verwenden, die zueinander orthogonal sind (orthogonale Transmit Diversity (OTD)). Dabei werden die Kanäle einer ersten Antenne ANT1 und ANT2 jeweils mit einem zusätzlichen orthogonalen Spreizfaktor gespreizt. Dies führt dazu, daß die Codekanäle tatsächlich in einer Ebene des Code-Baums mit dem doppelten Spreizfaktor liegen.

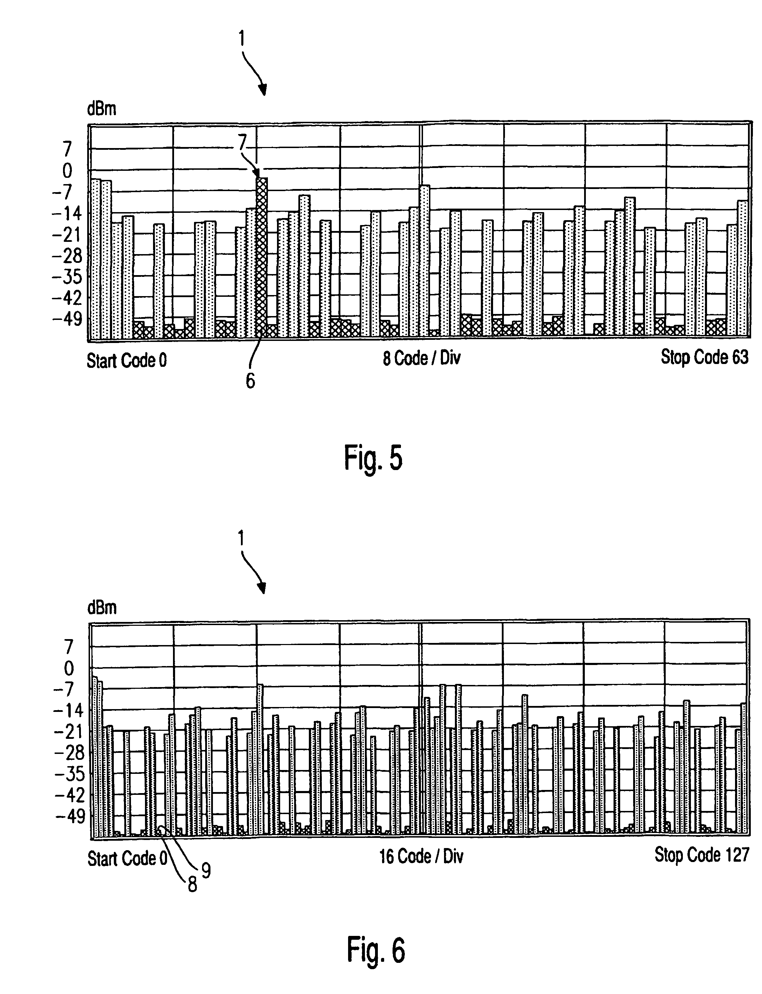

In der Fig. 4 ist dies beispielhaft für den Codekanal 16, der Antenne ANT1 bei Spreizfaktor 64 dargestellt. Wie durch den nicht ausgefüllten Kreis dargestellt, ist der Codekanal C16' der Antenne ANT1 bei Spreizfaktor 128 mit orthogonaler Transmit Diversity inaktiv. Der Codekanal C144 (Code 16, Antenne ANT2, Spreizfaktor SF128 mit OTD) ist dagegen aktiv. Dementsprechend wird die Leistung des Codekanals C144 als Alias-Leistung des Codekanals C16 (Code 16, Antenne ANT1, Spreizfaktor SF64 mit OTD) gemessen. Eine entsprechende Darstellung auf einer Anzeigevorrichtung 1 ist in Fig. 5 wiederum für einen Basisspreizfaktor 64 gezeigt. Der nur scheinbar aktive Codekanal C16 ist in der Fig. 5 mit dem Bezugszeichen 6 bezeichnet und durch die Verwendung einer weiteren Farbe der Balkendarstellung kenntlich gemacht. Der in Fig. 5 dem Codekanal C16 zugeordnete Marker 7 wird in der Darstellung bezüglich des Spreizfaktor 128 in Fig. 6 wieder dem Codekanal C16' zugeordnet, der nunmehr keine Alias-Leistung aufweist und dementsprechend inaktiv dargestellt ist. In der gezeigten Darstellung werden alle zur Antenne ANT1 gehörenden Codekanäle dargestellt, so daß der die Alias-Leistung verursachende Codekanal nicht erkennbar ist.

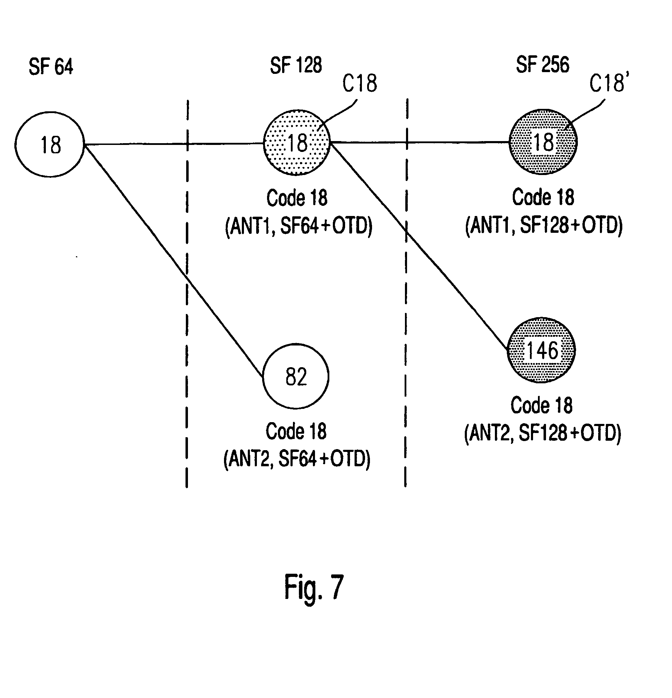

In Fig. 7 ist beispielhaft das Entstehen einer Alias-Leistung durch aktive Codekanäle einer höheren Codeklasse und gleichzeitiger Verwendung von orthogonaler Transmit Diversity dargestellt. Damit ist in dem Codekanal 18 (Code 18, Antenne ANT1, Spreizfaktor SF64 mit OTD) eine Leistung bei dem nächsthöheren Spreizfaktor zu erkennen, der von dem Codekanal 18, der nächsten Codeklasse (Antenne ANT1, Spreizfaktor SF128) mit orthogonaler Transmit Diversity herrührt, als auch eine Leistung, die von dem Codekanal 18 der Antenne ANT2 bei Spreizfaktor 128 mit OTD) herrührt. Beide Leistungen werden in dem Codekanal C18 der Antenne ANT1 bei Spreizfaktor SF64 mit orthogonaler Transmit Diversity abgebildet und dementsprechend in einem Diaramm, das die Leistungsverteilung der einzelnen Codekanäle darstellt, farbig kenntlich gemacht, wobei die Kennzeichnung vorzugsweise abhängig vom Anwendungsfall entweder der Kennzeichnung von Alias-Leistungen höherer Codeklasse oder von Alias-Leistungen durch OTD entspricht.

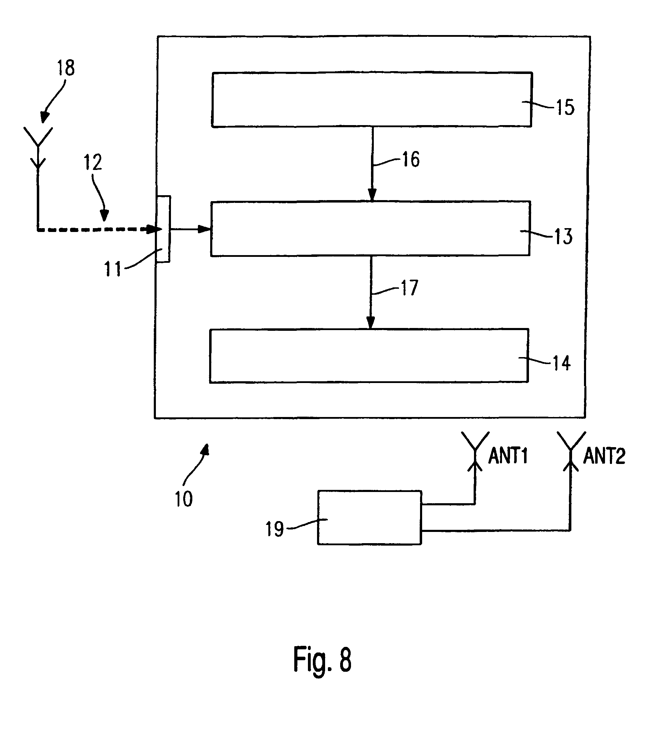

In Fig. 8 ist schematisch ein erfindungsgemäßer Signalanalysator 10 dargestellt. Der erfindungsgemäße Signalanalysator 10 hat einen Eingangsanschluß 11, an dem ein zu messendes CDMA-Signal 12 anliegt. Der Eingangsanschluß kann entweder ein Antennenanschluß für die Antenne 18 oder ein Anschluß für eine Signalleitung sein. Das ankommende Signal 12 wird von dem Eingangsanschluß 11 einer Analyseeinrichtung 13 zugeführt. In der Analyseeinrichtung 13 wird das ankommende CDMA-Signal analysiert, so daß für alle aktiven Codekanäle deren tatsächliche Leistung ermittelt wird und damit eine Zuordnung der aktiven Codekanäle zu den Codeklassen möglich ist. Zur Ausgabe der gemessenen Leistung der einzelnen Codekanäle auf einer Anzeigevorrichtung 14 wird über ein Bedienfeld 15 durch den Benutzer eine Eingabe vorgenommen, welche über eine Verbindung 16 der Analyseeinrichtung 13 zugeführt wird. Die in dem Bedienfeld 15 eingegebenen Darstellungsparameter beinhalten zum Beispiel die Auswahl bestimmten Basisspreizfaktor für die Anzeige.

Die zu einem bestimmten Basisspreizfaktor darzustellenden Leistungen der Codekanäle werden von der Analyseeinrichtung 13 über eine weitere Verbindungsleitung 17 an die Anzeigevorrichtung 14 übermittelt, auf der wiederum eine grafische Ausgabe der gemessenen Leistungen der einzelnen Codekanäle entsprechend den Darstellung aus Fig. 2, Fig. 3, Fig. 5 bzw. Fig. 6 erfolgt.

Wird aufgrund der farbigen Darstellung von Codekanälen durch den Bediener erkannt, daß ein Codekanal eine Alias-Leistung aufweist, so kann er über das Bedienfeld 15 eine Eingabe vornehmen, aufgrund der die Analyseeinrichtung 13 an die Anzeigevorrichtung 14 die Informationen für eine geänderte Darstellung einer höheren Codeklasse mit dem entsprechenden höheren Spreizfaktor SF übermittelt. Es kann auch automatisch eine Darstellung bezüglich des kleinsten Spreizfaktors gewählt werden, für den in den Codekanälen keine Alias-Leistung mehr auftritt. Anstelle eines automatischen Wechsels der Darstellung bezüglich eines Spreizfaktors ist ebenfalls über die Eingabe ein direktes Auswählen der Darstellung für einen bestimmten Spreizfaktor möglich.

Ferner ist in Fig. 8 noch der Fall veranschaulicht, daß ein Sender 19 über zwei in der Regel räumlich versetzte Antennen ANT1 und ANT2 sendet, wobei die verwendeten Codes wie vorstehend beschrieben in die nächsthöhere Codeklasse gespreizt sind.

## Patentansprüche

1. Verfahren zum Anzeigen von Leistungen von Code-Kanälen eines CDMA (Code Division Multiple Access)-Signals, das Code-Kanäle (C4, C32, C68, C16, C144) mit verschiedenen Spreizfaktoren (SF64, SF128, SF256) enthält, mit folgenden Verfahrensschritten:
- Empfangen des CDMA-Signals;
- Messen der Leistung der einzelnen Code-Kanäle (C4, C32, C68, C16) des empfangenen CDMA-Signals;
- Darstellen der gemessenen Leistungen der einzelnen Code-Kanäle für einen bestimmten Basis-Spreizfaktor in einem Diagramm (1); und
- Kennzeichnen derjenigen Code-Kanäle (5, 6), die eine Alias-Leistung aufweisen, wobei ein Code-Kanal (C4, C16, C18) bezüglich des bestimmten Basis-Spreizfaktors dann eine Alias-Leistung aufweist, wenn der Code-Kanal (C4, C16) mit dem Basis-Spreizfaktor (SF64, SF128) inaktiv ist und ein ihm entsprechender Code-Kanal (C68, C144) eines höheren Spreizfaktors (SF128, SF256) aktiv ist.

2. Verfahren nach Anspruch 1,
**dadurch gekennzeichnet,**
**daß** die Leistungen der Code-Kanäle in einem Balkendiagramm angezeigt werden.

3. Verfahren nach Anspruch 1 oder 2,
**dadurch gekennzeichnet,**
**daß** diejenigen Code-Kanäle (5, 6), die eine Alias-Leistung aufweisen, farbig **gekennzeichnet** werden.

4. Verfahren nach einem der Ansprüche 1 bis 3,
**dadurch gekennzeichnet,**
**daß** die Leistungen der Code-Kanäle nach einer Benutzereingabe automatisch mit dem höchsten Spreizfaktor (SF128) angezeigt werden, der einen aktiven Code-Kanal (C68) enthält.

5. Verfahren nach einem der Ansprüche 1 bis 4,
**dadurch gekennzeichnet,**
**daß** eine Markierung (4), die einem Code-Kanal (5) zugeordnet ist, der eine Alias-Leistung aufweist, bei einem Wechsel auf den höheren Spreizfaktor (SF128) dem die Alias-Leistung verursachenden Code-Kanal (5'') zugewiesen wird.

6. Verfahren nach einem der Ansprüche 1 bis 5,
**dadurch gekennzeichnet,**
**daß** beim Messen eines CDMA-Signals eines Senders mit einer ersten Antenne (ANT1) und einer zweiten Antenne (ANT2), die zueinander orthogonale Codes verwenden, ein Code-Kanal (6) mit dem Basis-Spreizfaktor (SF64) der ersten Antenne (ANT1), bei dem eine Alias-Leistung auftritt, die eine tatsächliche Leistung von einem aktiven Code-Kanal (C144) der zweiten Antenne (ANT2) ist, anders **gekennzeichnet** wird als ein Code-Kanal (5) mit einer Alias-Leistung, die eine tatsächliche Leistung von einem Code-Kanal (5") mit höherem Spreizfaktor (SF128) derselben Antenne (ANT1) ist.

7. Signalanalysator (10) zum Messen von Leistungen von Code-Kanälen eines CDMA (Code Division Multiple Access)-Signals, mit einer Analyseeinrichtung (13) zur Auswertung der Leistung der einzelnen Code-Kanäle (C4, C32, C16, C18, C144) und mit einer Anzeigevorrichtung (14) zum Visualisieren der Leistungen der einzelnen Code-Kanäle eines bestimmten Basis-Spreizfaktors in einem Diagramm (1),
**dadurch gekennzeichnet,**
**daß** diejenigen Code-Kanäle (C4, C16) bezüglich des bestimmten Basis-Spreizfaktors (SF64), die inaktiv sind und für die eine Alias-Leistung meßbar ist, in dem Diagramm (1) **gekennzeichnet** sind, wobei eine Alias-Leistung dann vorhanden ist, wenn ein einem inaktiven Code-Kanal (C4) bezüglich eines bestimmten Basis-Spreizfaktors (SF64) entsprechender Code-Kanal (C68) eines höheren Spreizfaktors (SF128) aktiv ist.

8. Signalanalysator nach Anspruch 7,
**dadurch gekennzeichnet,**
**daß** die Leistung der Code-Kanäle in einem Balkendiagramm dargestellt ist.

9. Signalanalysator nach Anspruch 7 oder 8,
**dadurch gekennzeichnet,**
**daß** die inaktiven Code-Kanäle (C4, C16) des bestimmten Basis-Spreizfaktors (SF64), für die eine Alias-Leistung meßbar ist, in dem Diagramm (1) gegenüber den aktiven Code-Kanälen (2) des bestimmten Basis-Spreizfaktors (SF64) farbig **gekennzeichnet** sind.

10. Signalanalysator nach einem der Ansprüche 7 bis 9,
**dadurch gekennzeichnet,**
**daß** die Code-Kanäle bezüglich des höchsten Spreizfaktors (SF128), der einen aktiven Code-Kanal (C68) enthält, automatisch auf der Anzeigevorrichtung (14) dargestellt sind.

11. Signalanalysator nach einem der Ansprüche 7 bis 10,
**dadurch gekennzeichnet,**
**daß** beim Analysieren eines CDMA-Signals eines Senders mit einer ersten Antenne (ANT1) und einer zweiten Antenne (ANT2), die zueinander orthogonale Codes verwenden, solche Code-Kanäle (16) einer Antenne (ANT1), für die eine Alias-Leistung meßbar ist, die von einem aktiven Code-Kanal (144) der anderen Antenne (ANT2) verursacht ist, anders dargestellt sind als Code-Kanäle (4) mit einer meßbaren Alias-Leistung, die von einem aktiven Code-Kanal (68) eines höheren Spreizfaktors (SF128) derselben Antenne verursacht ist.

## Claims

1. Method for displaying the powers of code channels of a CDMA (Code Division Multiple Access) signal, which contains code channels (C4, C32, C68, C16, C144) with different spreading factors (SF64, SF128, SF256), comprising the following procedural stages:
- reception of the CDMA signal;
- measurement of the power of the individual code channels (C4, C32, C68, C16) of the CDMA signal received;
- presentation of the measured powers of the individual code channels for a given basic spreading factor in a diagram (1); and
- marking of those code channels (5, 6), which provide an alias power, wherein a code channel (C4, C16, C18) provides an alias power relating to the given basic spreading factor, if the code channel (C4, C16) with the basic spreading factor (SF64, SF128) is inactive, and a code channel (C68, C144) of a higher spreading factor (SF128, SF256) corresponding to it is active.

2. Method according to claim 1,
**characterised in that**,
the powers of the code channels are displayed in a bar diagram.

3. Method according to claim 1 or 2,
**characterised in that**
those code channels (5,6), which provide an alias power, are marked in colour.

4. Method according to any one of claims 1 to 3,
**characterised in that**
the powers of the code channels are displayed automatically after a user entry, with the highest spreading factor (SF128), which contains an active code channel (C68).

5. Method according to any one of claims 1 to 4,
**characterised in that**,
in the case of a change to a higher spreading factor (SF128), a marking (4), which is allocated to a code channel (5), which provides an alias power, is assigned to the code channel (5") causing the alias power.

6. Method according to any one of claims 1 to 5,
**characterised in that**
when measuring a CDMA signal from a transmitter with a first antenna (ANT1) and a second antenna (ANT2), which use mutually orthogonal codes, a code channel (6) with the basic spreading factor (SF64) of the first antenna (ANT1), in which an alias power occurs, which is an actual power of an active code channel (C144) of the second antenna (ANT2), is marked differently from a code channel (5) with an alias power, which is an actual power of a code channel (5") with a higher spreading factor (SF128) of the same antenna (ANT1).

7. Signal analyser (10) for measuring powers of code channels of a CDMA (Code Division Multiple Access) signal, comprising an analysis device (13) for evaluating the power of the individual code channels (C4, C32, C16, C18, C144) and a display device (14) for visual presentation of the powers of the individual code channels of a given basic spreading factor in a diagram (1),
**characterised in that**
those code channels (C4, C16) relating to the given basic spreading factor (SF64), which are inactive and for which an alias power is measurable, are marked in the diagram (1), an alias power being present, if a code channel (C68) of a higher spreading factor (SF128), which corresponds to an inactive code channel (C4) relating to a given basic spreading factor (SF64), is active.

8. Signal analyser according to claim 7,
**characterised in that**
the power of the code channels is presented in a bar diagram.

9. Signal analyser according to claim 7 or 8,
**characterised in that**
the inactive code channels (C4, C16) of the given basic spreading factor (SF64), for which an alias power is measurable, are marked in the diagram (1) in a different colour from the active code channels (2) of the given basic spreading factor (SF64).

10. Signal analyser according to any one of claims 7 to 9,
**characterised in that**
the code channels relating to the maximum spreading factor (SF128), which contains an active code channel (C68), are automatically presented on the display device (14).

11. Signal analyser according to any one of claims 7 to 10,
**characterised in that**
in analysing a CDMA signal of a transmitter with a first antenna (ANT1) and a second antenna (ANT2), which use mutually orthogonal codes, those code channels (16) of an antenna (ANT1), for which an alias power is measurable, which is caused by an active code channel (144) of the other antenna (ANT2), are presented differently from code channels (4) with a measurable alias power, which is caused by an active code channel (68) of a higher spreading factor (SF128) of the same antenna.

## Revendications

1. Procédé permettant d'afficher les puissances des canaux de code d'un signal CDMA ("Code Division Multiple Access") qui comprend des canaux de code (C4, C32, C68, C16, C144) avec différents facteurs d'étalement (SF64, SF128, SF256), comprenant les étapes suivantes consistant à :
- recevoir le signal CDMA;
- mesurer la puissance des canaux de code individuels (C4, C32, C68, C16) du signal CDMA reçu;
- représenter les puissances mesurées des canaux de code individuels pour un facteur d'étalement de base déterminé sur un schéma (1); et
- identifier ceux des canaux de code (5, 6) qui présentent une pseudo-puissance, un canal de code (C4, C16, C18) concernant le facteur d'étalement de base déterminé présentant alors une pseudo-puissance lorsque le canal de code (C4, C16, C18) avec le facteur d'étalement de base (SF64, SF128) est inactif et un canal de code (C68, C144) correspondant à celui-ci, d'un facteur d'étalement supérieur (SF128, SF256), est actif.

2. Procédé selon la revendication 1, **caractérisé en ce que** les puissances des canaux de code sont affichées sur un histogramme.

3. Procédé selon la revendication 1 ou 2, **caractérisé en ce que** ceux des canaux de code (5, 6) qui présentent une pseudo-puissance sont identifiés en couleur.

4. Procédé selon l'une quelconque des revendications 1 à 3, **caractérisé en ce que** les puissances des canaux de code sont, après une entrée utilisateur, affichées automatiquement avec le plus grand facteur d'étalement (SF128) qui comprend un canal de code actif (C68).

5. Procédé selon l'une quelconque des revendications 1 à 4, **caractérisé en ce qu'**un marquage (4), qui est affecté à un canal de code (5) présentant une pseudo-puissance, est affecté, en cas de commutation sur le facteur d'étalement supérieur (SF128), au canal de code (5") provoquant la pseudo-puissance.

6. Procédé selon l'une quelconque des revendications 1 à 5, **caractérisé en ce qu'**à la mesure d'un signal CDMA d'un émetteur avec une première antenne (ANT1) et une deuxième antenne (ANT2), qui utilisent des codes mutuellement orthogonaux, un canal de code (6) avec le facteur d'étalement de base (SF64) de la première antenne (ANT1), pour lequel une apparaît pseudo-puissance qui est une puissance effective provenant d'un canal de code actif (C144) de la deuxième antenne (ANT2), est identifié différemment d'un canal de code (5) avec une pseudo-puissance qui est une puissance effective d'un canal de code (5") avec un facteur d'étalement supérieur (SF128) de la même antenne (ANT1).

7. Analyseur de signal (10) permettant de mesurer les puissances des canaux de code d'un signal CDMA ("Code Division Multiple Access"), avec un dispositif d'analyse (13) permettant d'évaluer la puissance des canaux de code individuels (C4, C32, C16, C18, C144) et avec un dispositif d'affichage (14) permettant de visualiser sur un schéma (1) les puissances des canaux de code individuels d'un facteur d'étalement de base déterminé,
**caractérisé en ce que**
ceux des canaux de code (C4, C16) concernant le facteur d'étalement de base déterminé (SF64) qui sont inactifs et pour lesquels une pseudo-puissance est mesurable sont identifiés sur le schéma (1), une pseudo-puissance existant alors lorsqu'un canal de code (C68) d'un facteur d'étalement supérieur (SF128) correspondant à un canal de code inactif (C4) concernant un facteur d'étalement de base déterminé (SF64) est actif.

8. Analyseur de signal selon la revendication 7,
**caractérisé en ce que**
la puissance des canaux de code est représentée sur un histogramme.

9. Analyseur de signal selon la revendication 7 ou 8,
**caractérisé en ce que**
les canaux de code inactifs (C4, C16) du facteur d'étalement de base déterminé (SF64) pour lesquels une pseudo-puissance est mesurable sont identifiés en couleur sur le schéma (1) par rapport aux canaux de code actifs (2) du facteur d'étalement de base déterminé (SF64).

10. Analyseur de signal selon l'une quelconque des revendications 7 à 9, **caractérisé en ce que** les canaux de code concernant le plus grand facteur d'étalement (SF128) qui comprend un canal de code actif (C68) sont représentés automatiquement sur le dispositif d'affichage (14).

11. Analyseur de signal selon l'une quelconque des revendications 7 à 10,
**caractérisé en ce que**
lors de l'analyse d'un signal CDMA d'un émetteur avec une première antenne (ANT1) et une deuxième antenne (ANT2), qui utilisent des codes mutuellement orthogonaux, ceux des canaux de code (16) d'une antenne (ANT1) pour lesquels une pseudo-puissance est mesurable, qui est provoquée par un canal de code actif (144) de l'autre antenne (ANT2), sont représentés différemment des canaux de code (4) avec une pseudo-puissance mesurable provoquée par un canal de code actif (68) d'un facteur d'étalement supérieur (ST128) de la même antenne.
